# EUROPEAN PATENT APPLICATION

(11) **EP 0 828 085 A2**
(43) Date of publication of application: **11.03.1998**
(21) Application number: 97202506.8
(22) Date of filing: 13.08.1997
(51) Int. Cl.: F16D 48/06

(54) **Automatic clutch**

(30) Priority: 13.08.1996 NL 1003794
(71) Applicant: Gearmaster Europe B.V., 2153 GB Nieuw-Vennep (NL)
(72) Inventor: Stoelinga, Dirk Jan, 1271 BV Huizen (NL)
(74) Representative: de Bruijn, Leendert C.

(57) **Abstract**

Device for the mechanical operation of a clutch pedal (10) or the parts of a motor vehicle with a manual gearbox which are connected to said pedal (10). The rotary movement of an electric motor (8) is converted to a linear movement which is then transmitted to a cable (3) which is connected to the clutch pedal (10). The electric motor (8) is controlled on the one hand by a switch (9) mounted, for example, on the gear lever (28) of the vehicle and on the other hand by a switch (32) which indicates whether or not the brake (33) is being applied. Engagement of the clutch is regulated as a function of the engine speed. A number of engagement characteristics are incorporated in the control unit, so that it is possible to achieve optimum engagement of the clutch using only these parameters.

## Description

The present invention relates to a device according to the preamble of claim 1.

A device of this type is disclosed in French Patent Publication 2 613 937. A distinction must be made between a device of this type and fully automatic gearboxes with which automatic gear changing is combined with a torque converter, centrifugal clutches, electromagnetic clutches and the like.

Automatic clutches of the type under consideration are in the main fitted in vehicles at a later stage. The clutch proposed in Netherlands Laid Open Application 9 201 190 is a great success in lorries and other heavy vehicles. In general these vehicles are driven by relatively slow-running diesel engines, with which clutch engagement is less critical because of the presence of a regulator.

However, clutch engagement does present a problem if clutches of this type are used with fast-running four-stroke engines. In the prior art it is proposed to make clutch engagement dependent on the position of the accelerator pedal. That is to say, if the accelerator pedal is depressed relatively abruptly, the clutch engages relatively quickly and fiercely. If, on the other hand, the accelerator pedal is depressed gradually, it will be possible to achieve gradual engagement of the clutch.

One problem here is the shift in the position of the accelerator pedal relative to the throttle or air valve. Furthermore, there are appreciable problems when converting the position of the accelerator pedal into an electrical signal. Because, especially if the clutch is intended for subsequent installation in vehicles, the aim is as far as possible to propose a universal construction, fitting of the link to the accelerator pedal has, as a result of the installation time, had an appreciable adverse effect on the price of the device.

Regular adjustment of the device has been found to be necessary because of the shift in the position of the accelerator pedal relative to the throttle. This means that, in addition to the work of fitting the sensor for the position of the accelerator pedal, adjustment work is needed in the garage.

Moreover, with this construction it is not easily possible to provide for adjustment by the driver. It has been found that some drivers consider relatively fast engagement of the clutch to be desirable, whilst others consider it desirable that the clutch slips for somewhat longer. This also has adverse consequences for the target fuel consumption. When towing a caravan, for example, the conditions are changed and these demand a different approach to engagement of the clutch.

Accurate measurement both of the position of the accelerator pedal and of the position of the clutch-operating pin or piston and determination of the progression in movement when the clutch is operated, that is to say the engagement characteristic, on the basis of these measurements have been proposed in the prior art. One example of this is found in DE 37 30 635 A1. Although constructions of this type are readily achievable at the time of original assembly, as is the case in this German Offenlegungsschrift, such a construction is much too complex for subsequent installation in vehicles.

For this reason clutches of this type have still not found general application in cars, although the demand for these exists.

The aim of the present invention is to provide an automatic clutch which does not have the disadvantages described above.

This aim is achieved with a device as described above by means of the characterising features according to Claim 1.

In contrast to the prior art, engagement of the clutch is not controlled by the position of the accelerator pedal, the speed of the motor vehicle or the position of the actuating pin or piston for the clutch but solely by the speed of the engine, operation of the gear lever, the operation or non-operation of the brake pedal and the engagement characteristics previously entered in the control unit. The engine speed can be determined in a particularly simple manner. In the case of engines with ignition equipment it is possible to produce a branch from the coil and in the case of diesel engines the signal originating from the alternator can be used for this purpose. In a universal application, only the signal from the alternator will be used.

It will be understood that if engagement of the clutch is controlled electronically as a function of the engine speed, subsequent adjustment is no longer necessary. Moreover, it is no longer necessary to provide all manner of expensive adaptors to be able to determine the position of the accelerator pedal of each different type of vehicle. A simple connection to the dynamo, often already present in vehicles, is sufficient. Moreover, the cost price is reduced as a result of such measures.

Apart from the combination of engine speed and operation or non-operation of the brake pedal (the gear lever will, of course, always be operated), it is possible to load a number of preprogrammed engagement characteristics which depend solely on the engine speed into the control unit and to select permanent parameters for the determination of these engagement characteristics at the time of fitting of the control unit, intended as a universal unit, by the engineer or, optionally, possibly by operation from the cab of the vehicle. By this means it is possible to influence in a predetermined manner how the clutch engagement progresses. Moreover, means can be provided in the driver's cab for compensating for possible wear of the clutch, which is reflected in greater or lesser play in the clutch pedal. Of course, an on/off switch can be fitted in the driver's cab to switch off the device described above under special circumstances.

Because the engagement of the clutch is now made fully electric, it is possible to influence how engagement progresses in a simple manner. To this end correction means can be provided, which preferably are mounted in the driver's compartment. The driver can determine how engagement of the clutch progresses, depending on the operating conditions. Moreover, he is able in a particularly simple manner to make minor corrections which are associated with possible wear of the clutch, which is reflected in greater or lesser play in the clutch pedal.

The operating means for operating the movement of the clutch pedal or the components connected thereto can comprise all constructions known from the prior art. A particularly simple construction of the operating means, which is independent of the operation of the motor vehicle in other respects, comprises a rotary electric motor provided with a gearbox for converting a rotary movement into a linear movement, the output from said gearbox being connected to the clutch pedal or the components connected thereto.

A rotary electric motor of this type can be, for example, a windscreen wiper motor, which is strong and compact, can be produced in large numbers and has relatively low cost prices.

In order to be able accurately to control the movement of such an electric motor, which is important in particular in the region from the point where the clutch starts to slip to complete engagement of the clutch, in a preferred embodiment of the invention means for determining the number of revolutions are fitted to an electric motor of this type. These means are connected to the abovementioned regulating means. Of course, it is also possible to employ pulse control of the electric motor and to count the number of pulses.

The dimensions of the electric motor are determined mainly by the power which has to be produced approximately in the middle of the clutch operation path. After all, the first part of the path demands relatively low power and the same also applies in respect of the final part of the path if the clutch spring is constructed as a cup spring.

In order to make the electric motor as small as possible, it is proposed to provide auxiliary means which as far as possible assist the action in the mid part of the disengagement path. Such auxiliary means can be (gas) springs and the like, being equipped to operate progressively.

The invention will be explained in more detail below with reference to an illustrative embodiment shown in the drawings. In the drawings:
Fig. 1 shows, diagrammatically, a front view, partially in cross-section, of the device according to the invention;
Figs 2a-2b show a side view, in cross-section, of operating means according to the invention in various positions;
Fig. 3 shows an end view of part of the electric motor used with the operating means according to the invention;
Fig. 4 shows a plot of the engagement characteristic for various conditions and
Fig. 5 shows four predetermined settings for engagement characteristics, depending on the engine speed.

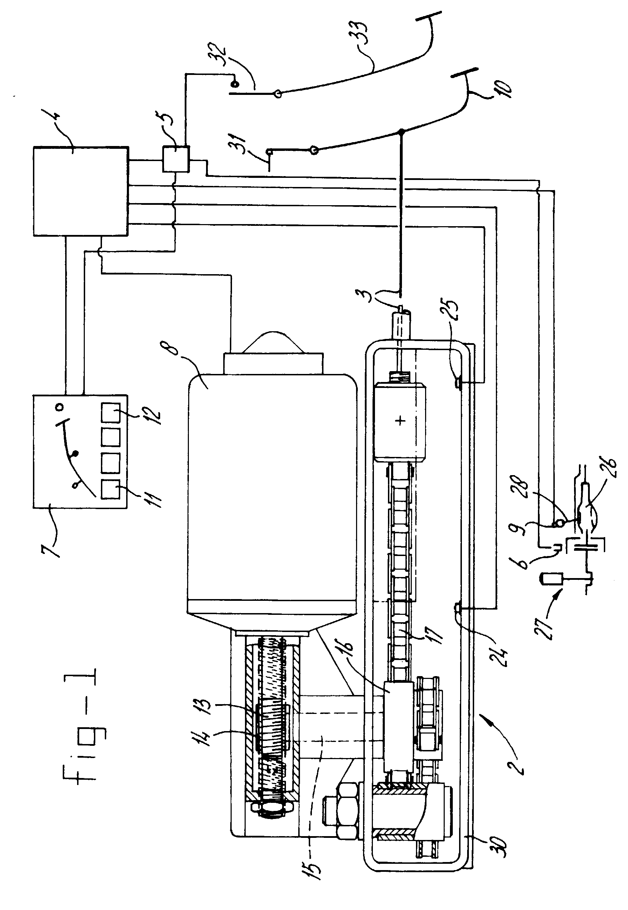

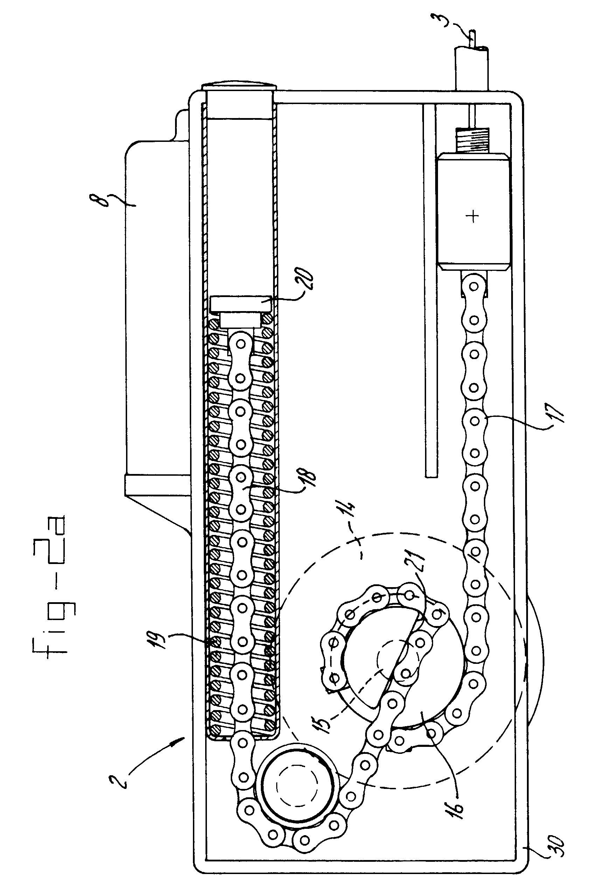

The device according to the invention is intended to be used in combination with a motor vehicle which is provided with an internal combustion engine (indicated diagrammatically in Fig. 1 by 27), which is connected via a clutch to a gearbox 26. This clutch will in general be a single or multiplate clutch and is not shown in more detail. In Fig. 1, 33 indicates the brake pedal of the vehicle to which switch 32 is connected.

In order to operate the clutch automatically, it is proposed according to the invention to connect a cable 3 to clutch pedal 10. That is to say a cable other than the clutch cable which is indicated by 31. By pulling on said cable 3 the clutch pedal 10 is depressed automatically. This cable is connected to operating means 2. Movement of the cable 3 is determined by a motor 8, which is present in the operating means 2, the functioning of which is, in turn, determined by a regulator 4. A control unit 5 is located in front of (or integrated with) the regulator 4, which control unit 5 is connected to a sensor 6 which registers the speed of the engine. In the illustrative embodiment shown here the number of revolutions of the flywheel is determined, but it must be clear that sensor 6 can also be a simple connection to the alternator of the vehicle or any other construction which determines the engine speed (connection to the coil).

Regulator 4 is, moreover, connected to switch 9, which is fitted on the top of the gear lever 28 of gearbox 26. As already indicated, there is a brake switch 32 which is connected to control unit 5.

In the driver's cab there is a display 7. The progression in engagement of the clutch is shown on this display. In addition, there are two switches 11 and 12, which are connected to the control unit 5.

As already indicated above, the operating means 2 comprise an electric motor 8, such as a windscreen wiper motor. The output shaft of the motor 8 is constructed as a worm 14. A gear wheel 13 engages on the worm and is, in turn, connected to a shaft 15. A disc 16 is fitted on shaft 15, on the one hand a chain 17, which is also connected to the disc 16, being payed out from the disc. On the other hand, the disc 16 is provided with a top section which has a flattened part 21 over which a chain 18 moves, which chain 18 is likewise attached to the disc 16. Chain 18 is provided at its end with a cup 20 on which a spring 19 engages, the other end of the spring bearing on the housing 30.

The free end of chain 17 is connected to cable 3. Limit switches 24 are provided, which limit switches are connected to regulator 4 to prevent the movement in one of the directions continuing too far.

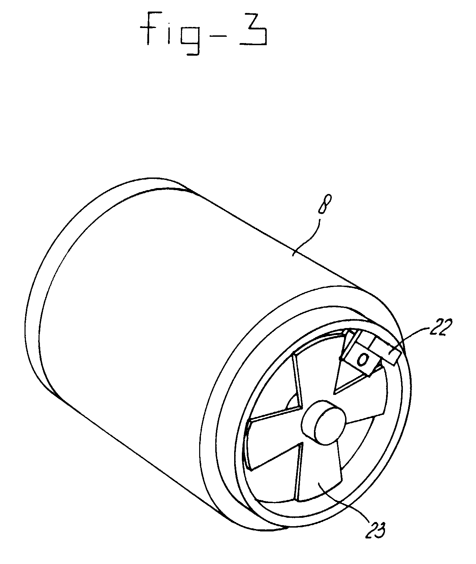

At the front end of the motor a rev counter 22 is rigidly mounted on the motor 8 and a rotor 23 is movably mounted on the shaft of the motor, as is shown in Fig. 3. The signal originating from the counter 22 is fed back to regulator 4.

The device described above functions as follows:

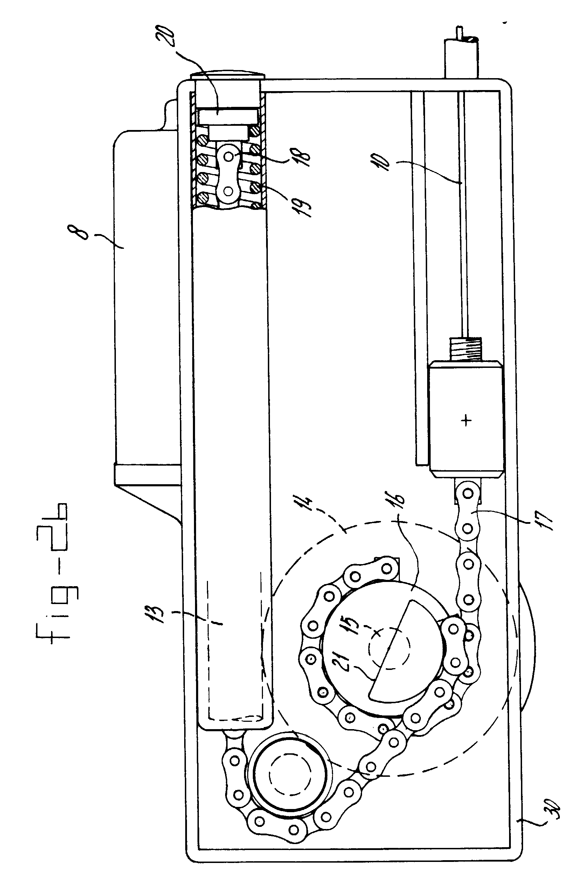

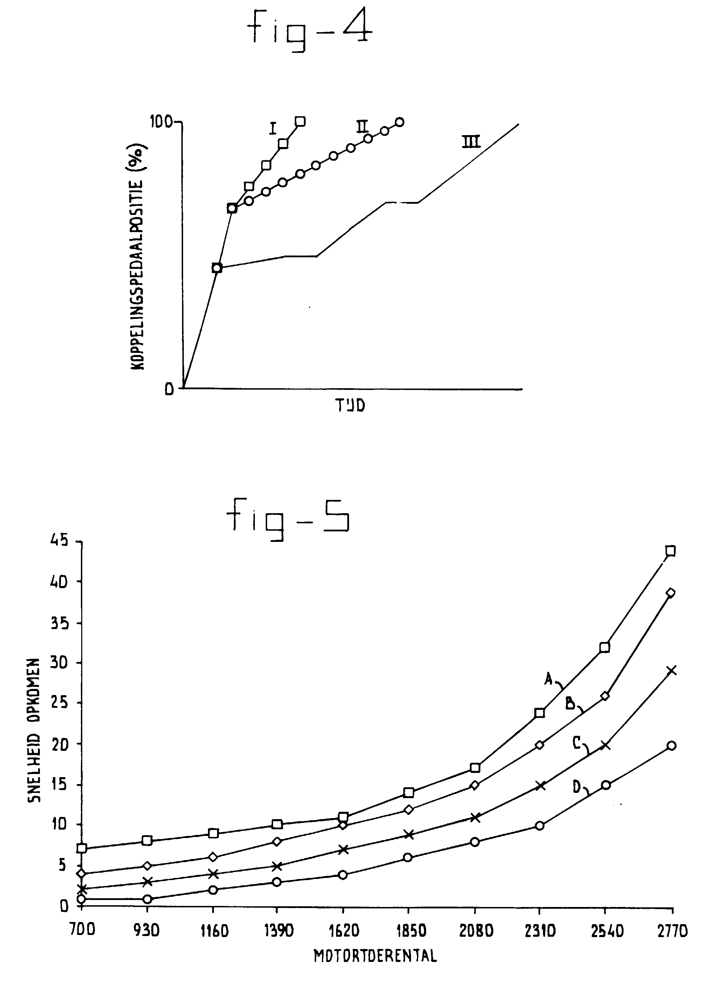

If the user wishes to change gear, he or she operates the gear lever 28 and, thus, switch 9. A number of situations can be differentiated in this regard. When pulling away somewhat higher revs will be used and this will be recognised by control unit 5 and the engagement characteristic will be adjusted to this. (Fig. 4, curve III). On changing up, the user will in general lift his or her foot from the accelerator pedal and the engine will be running at lower revs at the time the clutch is disengaged. In this case the engagement characteristic of the clutch will be changed (curve I, Fig. 4). In another case the driver will be changing down while braking and control unit 5 will select yet another engagement characteristic (II, Fig. 2) as a result of operation of the brake switch 32. The various features can, as an option, be correctable with the aid of switches 11 and 12 on the display 7 in the driver's cab. Control unit 5 transmits a control signal to regulator 4, which signal is dependent on the engagement characteristic chosen. By this means the electric motor 8 is operated and the progression in movement of this electric motor 8 is monitored with the aid of rev counter 22. The demanding part of clutch disengagement, that is to say the mid section of the clutch stroke, is assisted by spring 19. By providing disc 16 with a flattened side, a progressive movement is produced, so that the force is the greatest in the mid section of the clutch disengagement path. By fitting a worm it is easily possible accurately to control the clutch movement.

By means of direct measurement at the motor 8, particularly accurate control of the clutch movement can take place without any adverse effect of possible play in the system being experienced.

The various positions of the device according to the invention are shown in Figs 2a-b.

With the aid of the switches 11 and 12, the user is able to influence the dependence of clutch operation on engine speed. That is to say, he or she can specify the point in time at which clutch operation starts at a relatively low engine speed or specify the end of clutch operation at a relatively high engine speed. He or she is also able to influence the clutch operation curve, that is to say the rev range over which clutch operation takes place. It is also possible to make a correction for any wear on the clutch plate or in the link between clutch pedal and clutch.

It will be understood that the construction described above can be fitted particularly easily in a motor vehicle. It is necessary only to find a suitable location for operating means 2 and to make a connection to the clutch pedal. All other components can be installed with complete freedom in any desired position.

The strength of the spring 19 is dependent on the motor 8 used and the force required to operate the clutch. A value of 200 N may be mentioned as an example.

Fig. 4 shows the various engagement characteristics. I indicates the situation when changing up, II the situation when changing down and III the situation when pulling away from stationary.

Fig. 5 shows a number of preprogrammed engagement characteristics in control unit 5. These engagement characteristics can be entered at the time of installation or subsequently. Engagement of the clutch takes place as a function of these characteristics. Once selected, an engagement characteristic A - D will not be changed again.

It will be understood from the above that there are numerous possible variants to the construction described above which are obvious to a person skilled in the art on reading the description. For instance, it is possible to replace the chain transmission described above by any other mechanism for translating a rotary movement into a linear movement, such as a rod assembly. These variants are all considered to fall within the scope of the appended claims.

## Claims

1. Device for the mechanical operation of a clutch pedal (1) or the parts which are connected to said pedal of a motor vehicle with a manual gearbox, comprising operating means (2) for engaging on said clutch pedal or the parts connected thereto, regulating means (4) for controlling said operating means, switch means for supplying a clutch disengagement signal to said regulating means and a load-dependent control unit (5) for said regulating means to influence the movement paths of the operating means when engaging the clutch, such that the clutch is engaged further at a higher engine load, said load-dependent control unit being equipped to operate independently of the engine speed, characterised in that said switch means comprise means (9) which detect the operation of the gear lever (28) of the gearbox (26) and means (32) which detect the operation of the brake pedal (33) of said motor vehicle and in that at least three (I, II, III) preprogrammed engagement characteristics for the operating means are incorporated in the control unit (5), said engagement characteristics being selected depending on the engine speed and the operation or non-operation of one or more of the switch means (9).

2. Device according to Claim 1, wherein at least two (A, B) preprogrammed engagement characteristics for the operating means are incorporated in the control unit (5), said engagement characteristics to be pre-selected as a function of the engine speed.

3. Device according to one of the preceding claims, wherein said engagement characteristics can be influenced with the aid of switches (11, 12) mounted in the driver's compartment.

4. Device according to one of the preceding claims, wherein said operating means comprise a rotary electric motor (8) provided with a drive for converting a rotary movement into a linear movement, wherein the output of said drive is connected to the clutch pedal or the parts connected thereto.

5. Device according to Claim 4, wherein means (22, 23) for determining the number of revolutions are fitted to the electric motor, the output of said means being connected to the regulating means.

6. Device according to Claim 4 or 5, wherein the drive is provided with spring means (9) which are to be so tensioned as to assist clutch engagement.

7. Device according to Claim 6, wherein said spring means are equipped to operate progressively.
